# EUROPÄISCHE PATENTSCHRIFT

(11) **EP 0 629 589 B1**
(45) Veröffentlichungstag und Bekanntmachung des Hinweises auf die Patenterteilung: **02.05.1997**
(21) Anmeldenummer: 94104645.0
(22) Anmeldetag: 24.03.1994
(51) Int. Cl.: C03B 19/06, C03B 23/20, E04F 13/14, C03C 10/00, C03B 19/09

(54) **Verfahren zur Herstellung von natursteinähnlichen, plattenförmigen Bau- und Dekorationsmaterialien**
Method for making sheets for buildings and decoration which resemble natural stone
Procédé de fabrication de plaques pour bâtiments et décoration resemblant le pierre naturel

(30) Priorität: 15.06.1993 DE 4319808
(43) Veröffentlichungstag der Anmeldung: 21.12.1994
(73) Patentinhaber: Schott Glaswerke, 55122 Mainz (DE); Carl-Zeiss-Stiftung trading as SCHOTT GLASWERKE, 55122 Mainz (DE)
(72) Erfinder: Lingart, Jury K., CS-17000 Praha (CS)

(56) Entgegenhaltungen:
- DE-A- 4 123 581
- DE-A- 4 125 698

## Beschreibung

Die Erfindung betrifft ein Verfahren zur Herstellung von natursteinähnlichen, plattenförmigen Bau- und Dekorationsmaterialien hoher Festigkeit zur Verkleidung von Fassaden, Wänden und Böden im Innen- und Außenbereich aus geschichteten Einzellagen von gebrochenem Glas, Zuschlagstoffen, insbesondere Sand und deren Abmischungen.

Für dekorative Anwendungen im Innen- und Außenbereich sind zahlreiche natürliche und künstlich hergestellte Materialien im Einsatz. Breite Verwendung finden von den natürlichen Materialien insbesondere Marmor und Granit, die in großen Mengen zur Innen- und Außenverkleidung von repräsentativen Gebäuden zur Anwendung kommen. Neben dem dekorativen Eindruck muß auch die Korrosionsbeständigkeit und eine wirtschaftliche Herstellung gewährleistet sein. Natürlich vorkommende Materialien genügen diesen Anforderungen nicht immer, da sich häufig nicht genügend große Flächen mit einheitlichem Eindruck herstellen lassen und da die Korrosionsbeständigkeit und die Festigkeit aufgrund der Porösität des natürlichen Materiales nicht immer optimal ist.

So ist aus der DE 41 25 698 C1 ein glaskeramisches Material mit einer Zusammensetzung (in Gew.-% auf Oxidbasis) von

| | |
|---|---|
| SiO₂ | 64.1 - 72 |
| Al₂O₃ | 2.9 - 11 |
| CaO | 15.0 - 2 6 |
| MgO | 0 - 8 |
| ZnO | 0 ≤ 2 |
| BaO | 0 - 0.5 |
| K₂O | 0 - 7.4 |
| Na₂O | 0 - 2 |
| F | 0.5 - 4 |

wobei Σ Na₂O, K₂O mindestens 2 beträgt, bekannt, das als Natursteinersatz für dekorative Anwendungen und zum Belegen von Fußböden und Verkleiden von Wänden und Fassaden in der Bauwirtschaft Verwendung findet.

Glaskeramik als Natursteinersatz bietet zwar ein gutes dekoratives Erscheinungsbild ist aber z. B. auch wegen seines aufwendigen Keramisierungsprozesses aufwendig und teuer herzustellen. Des weiteren werden zur Herstellung relativ reine und damit wertvolle Rohstoffe benötigt.

Die DE 41 23 581 Al offenbart ein Verfahren zur Herstellung von Formkörpern aus Glasgranalien, insbesondere Bauplatten, bei dem aus einer Mischung aus zerkleinertem Glas und einem Blähmittel Rohgranalien hergestellt werden und diese Rohgranalien unter Wärmeeinwirkung gebläht werden können, wobei
- zunächst eine Lage aus ungeblähten Rohgranalien und darüber eine Schicht aus geblähten Schaumglasgranalien in noch heißem oder auch kaltem Zustand als Haufwerk in eine Form geschüttet werden
- und das Haufwerk auf 700 bis 900°C, vorzugsweise 800 - 900°C erhitzt wird
- und dann unter einem Druck von 0,005 - 0,015 N/mm2 um 5 - 15 % verdichtet wird, wobei ein Formkörper mit festem Verbund entsteht.

Diese nach dem Verfahren der DE 41 23 581 A1 hergestellten Bauplatten eignen sich besonders als Dämmplatten in einem Wärmedämmverbundsystem, wobei die die Platten aufbauenden Rohgranalien vorher erst energieintensiv erzeugt werden müssen.

Aufgabe der vorliegenden Erfindung ist es, ein Verfahren zur Herstellung von dekorativen, natursteinähnlichen, witterungsbeständigen, und gegen saure und alkalische Medien beständige, auch großformatige plattenförmige Baumaterialien hoher Festigkeit, vorzustellen mit dem es möglich ist, kostengünstig und umweltfreundlich ohne organische Zusätze mit preiswerten und jederzeit verfügbaren Rohstoffen wie Glas, Altglas und z. B. Sand u. a. natürlichen anorganischen Zuschlagstoffen Verkleidungsplatten für Fassaden, Wände und Böden zu produzieren, die alle baurechtlich und - behördlichen Auflagen erfüllen und darüber hinaus den Anforderungen nach ästhetischem zeitgemäßem Design bei variabler Gestaltungsmöglichkeit genügen.

Des weiteren ist es Aufgabe der Erfindung, die Herstellungsparameter so zu wählen, daß durch die vorgeschlagene Vorgehensweise und eine geeignete Temperaturführung bei der Herstellung der Baumaterialien die Platten
- nicht mit der Produktionsform reagieren
- sich keine Unebenheiten auf der Plattenoberfläche ergeben
- die Platten nicht deformieren,
- sich keine Blasen, Poren, Einschlüsse und/oder Mikrorisse in der Deckschicht ausbilden, und
- keine Schleif- und Polierarbeiten anfallen.

Die Aufgabe wird nach der Erfindung durch das Verfahren gemäß Anspruch 1 gelöst.

Nach der Bereitstellung des in den temperaturbeständigen Formen verdichteten aus geschichteten Einzellagen aufgebauten Lagenstapels beginnt die thermische Behandlung, die aus mehreren aufeinanderfolgenden Verfahrensschritten besteht:

### Verfahrensschritt 1.5:

Aufheizen des Lagenstapels bis auf eine Temperatur von 600 - 850°C. Die Höhe der jeweiligen Temperatur ist natürlich von der chemischen Zusammensetzung der Charge und der Sorte des für die Oberflächenschicht verwendeten Glasgranulates abhängig. Die Aufheizzeit beträgt etwa 30 min. für Platten mit einer Dicke von 10 - 12 mm und bis zu 100 min. für Platten mit einer Dicke bis zu 40 mm. Für Lagenstapeldicken ab 13 mm erhöht sich die Zeit des Verweilens der Platte bei den einzelnen Verfahrensschritten etwa nach der Formel t = 0.08 x D x tₒ , wobei D die Dicke der Platte (in mm) und tₒ die Aufheizzeit für eine Platte der Dicke von 10 - 12 mm, also 30 min. angibt. Z. B. ergibt sich für einen 30 mm dicken Lagenstapel: t = 0.08 x 30 x 30 = 72 min. Die Aufheizzone, gegliedert in eine oder zwei Kammern muß so ausgelegt sein, daß die Verteilung des Wärmestromes einen parabolischen Verlauf längs und quer zur Platte hat. Dieses ermöglicht einen Ausgleich der Wärmeverluste an den Plattenrändern und somit eine gleichmäßige Temperatur der ganzen Plattenfläche mit einer Toleranz von ± 10 K bis ± 12 K. Wenn die Temperaturunterschiede an der Plattenoberfläche größer sind als ± 12 K wird die Platte uneben, weil die Unterschiede der Temperaturen der einzelnen Lagen der Platte, vor allem in der Nähe der Ränder, zu groß werden. Diesen Fehler kann man auch während der weiteren thermischen Behandlung nicht mehr beseitigen. Das betrifft vor allem die Ecken der Platte.

### Verfahrensschritt 1.6:

Der Lagenstapel wird bei dieser Temperatur gehalten. Die Haltezeit beträgt von 6 bis 35 min., abhängig von der Plattendicke. Typischerweise wird ein Lagenstapel mit einer Dicke von 10 - 12 mm 10 min. ausgeglüht. Der Verlauf der Verteilung der Wärmeströme sollte dem Verlauf, wie für Schritt 1.5 angegeben ähnlich sein; die Temperaturdifferenzen an der Plattenoberfläche dürfen jedoch hier nicht größer sein als 3 bis 5 K sein. Bei größeren Temperaturdifferenzen werden die Plattenränder uneben, die Dicke der umgeschmolzenen Schicht an den Rändern ungleichmäßig, so daß Teile des Randes aus Qualitätsgründen abgeschnitten werden müßten. Dieser Schritt ist außerordentlich wichtig im Hinblick auf die Herstellung einer qualitativ hochwertigen Oberflächenschicht. In dieser Bearbeitungszone muß die Bildung eines Temperaturgradienten z. B. von etwa 50 bis 70 K in Richtung der Plattendicke (10 - 12 mm) gewährleistet sein, um während des nächsten Behandlungsschrittes ein Verbacken der Unterseite der Platte mit der Form zu vermeiden. Die Temperatur dieses Verfahrensschrittes muß jedenfalls über eine Zeit gehalten werden, die das Erreichen eines stationären thermischen Zustandes ermöglicht. Die Haltezeit wird dabei durch die thermophysikalischen Eigenschaften des Lagenstapels und der temperaturbeständigen Form bestimmt. Wenn die Form aus einem Material mit kleiner Wärmekapazität und hoher Wärmeleitfähigkeit gefertigt wird, so ist die Haltezeit relativ kurz, da das gewünschte thermische Gleichgewicht schnell erreicht wird.

### Verfahrensschritt 1.7:

Die maximale Verfahrenstemperatur muß auf die ganze Oberfläche der Platte sehr gleichmäßig bis zum Erreichen einer Viskosität von insbesondere 10^{4.5} - 10⁵ dPas aufgebracht werden. Die Einwirkungszeit beträgt 6 bis 40 min., insbesondere 12 min. für einen 10 - 12 mm dicken Lagenstapel.

Die Haltezeit muß jedenfalls auch ausreichend lang sein, um eine spiegelglatte Oberfläche auf der ganzen Platte zu erzeugen.

Die Temperaturbeaufschlagung erfolgt über einen über die gesamte Plattenfläche gleichmäßig verteilten Wärmestrom einseitig von oben, bevorzugt in einem Durchlaufofen mit kontinuierlichem oder Schrittbetrieb.
Die Bestimmung der maximalen Verfahrenstemperatur für Chargen verschiedener Zusammensetzungen ist besonders wichtig. Wird die Temperatur zu hoch gewählt, werden die Viskosität zu klein, entstehen auf der Oberfläche der Platte Fehler wegen übermäßiger Entgasung der tieferliegenden Materiallagen. Wird die Temperatur zu tief gewählt, werden die optimalen mechanischen Eigenschaften nicht erreicht. Der gleiche negative Effekt wird erreicht, wenn die maximale Verfahrenstemperatur zu kurze Zeit einwirkt. Die Gleichmäßigkeit der Temperaturverteilung während dieses Verfahrensschrittes auf der ganzen Plattenoberfläche hat auch einen entscheidenden Einfluß auf die Reproduzierbarkeit der Farben. Die Temperaturdifferenzen auf der Oberfläche dürfen ± 8 K nicht überschreiten. Die maximale Temperatur ist abhängig von der Zusammensetzung der Charge und beträgt z. B. typischerweise von 840 bis 990°C. Für die einzelnen Zusammensetzungen wird sie auf Grund des Homogenitätsgrades der Oberflächenschicht bestimmt.

### Verfahrensschritt 1.8:

Die Abkühlung bis auf Temperaturen von 750 - 600°C erfolgt in einer Zeitspanne die benötigt wird, um eine gleichmäßige Temperaturverteilung über die gesamte Dicke des Stapels zu erreichen, in einer Zeitspanne von 6 bis 35 min., insbesondere in 10 min. für einen Lagenstapel mit einer Dicke von 10 bis 12 mm. Die Temperatur ist etwa der Temperatur des Verfahrensschrittes 1.6 gleich oder bis zu 25°C höher. Praktisch wird diese Abkühlung am einfachsten durchgeführt, in dem die Form mit einer geeigneten Geschwindigkeit durch eine passive Zone z. B. eine Kammer ohne Heizvorrichtung mit einer ungleichmäßig gestalteten Auskleidung geschoben wird. Die Auskleidung muß dabei so gestaltet sein, daß die Oberfläche der Platte gleichmäßig gekühlt wird. Ist das nicht der Fall, entstehen Eigenspannungen und nachfolgend Deformationen der Platte, die sich auch durch thermische Nachbehandlung nicht mehr beseitigen lassen. Die Kühlungszeit wird in erster Linie durch die Wärmekapazität der Platte, der Form und der Kammer bestimmt, aber auch durch die Geschwindigkeit, mit welcher die Form durch diese passive Zone durchgeschoben wird.

### Verfahrensschritt 1.9:

Um die Platten dann spannungsfrei zu tempern, muß die Temperatur im ganzen Volumen ausgeglichen werden, wofür üblicherweise 15 bis 65 min. ausreichen, insbesondere 20 min. für einen Lagenstapel mit einer Dicke von 10 bis 12 mm. Dabei werden in den ersten 5 min. mehr als 90 % der inneren Spannungen beseitigt. Die Gleichmäßigkeit der Temperaturverteilung sollte der des Schrittes 1.6 entsprechen. Es wurde nachgewiesen, daß eine Ungleichmassigkeit der Temperaturverteilung von ± 10 K eine schon sichtbare Unebenheit der Platte hervorruft. Die optimale Glühtemperatur entspricht einer Viskosität von 10¹³ bis 10^{13,5} dPas. Anschließend wird weiter abgekühlt, wobei festgestellt wurde, daß bis zum Erreichen einer Temperatur von 400 - 500°C, die Kühlgeschwindigkeit 2 bis 5 K/min. betragen muß, was 40 min. bis 2 Stunden dauert. Die Kühlgeschwindigkeit wird durch die Dicke der Platte und die gesamte Wärmekapazität der Platte, der Form und der Formenwanne bestimmt.

Eine größere Kühlgeschwindigkeit wirkt sich negativ auf die mechanischen Eigenschaften der Oberflächenschicht aus; es entstehen Risse und Deformationen. Eine kleinere Kühlgeschwindigkeit hat keinen Einfluß auf die Qualität der Platte. Es wurden folgende Kühlgeschwindigkeiten optimiert: 3 K/min. für Platten mit einer Dicke von über 15 mm und armierte Platten, 4 - 5 K/min. für Platten mit einer Dicke von 8 bis 12 mm. Wenn der Kühlvorgang mit einem nichtlinearen Temperaturverlauf erfolgt, entstehen in der Oberflächenschicht Mikrorisse. Die weitere Abkühlung bis zu Raumtemperatur dauert 3 bis 3.5 Stunden, für sehr dicke Platten bis zu 4,5 Stunden. Es wurde festgestellt, daß durch die Anwendung einer aktiven Luftkühlung oder eines gekühlten Ofengewölbes diese Zeiten auch auf 1.5 bis 2 Stunden verkürzt werden können, ohne negativen Einfluß auf die Qualität. Der Ablauf dieses Schrittes ist eine Frage der Auslegung des Ofens und der Arbeitsorganisation. Es wurden auch Platten bei Temperaturen von 300 bis 350 °C dem Ofen direkt entnommen.

Nach einer bevorzugten Ausführungsform der Erfindung kann als gebrochenes Glas ein Glasgranulat aus Flachglas und/oder aus Hohlglas, wie z. B. von Flaschen und Behältern,
und deren Mischungen eingesetzt werden, wobei auch Altglas, Recyclingglas und Glasreste mitverwendet werden können.

Die verwendeten Gläser sollten bevorzugt eine Zusammensetzung in den Grenzen von (in Gew.-%)

| | |
|---|---|
| SiO₂ | 60 - 80 |
| Al₂O₃ | 0 - 7 |
| Na₂O | 2 - 17 |
| K₂O | 0 - 7 |
| MgO | 0 - 4.5 |
| CaO | 0 - 10 |
| PbO | 0 - 20 |
| BaO | 0 - 13.5 |
| B₂O₃ | 0 - 15 |
| SrO | 0 - 1.5 |
| ZnO | 0 - 1 |
| ZrO₂ | 0 - 3 |
| TiO₂ | 0 - 1 |
| CeO₂ | 0 - 0.5 |
| Sb₂O₃ | 0 - 1 |
| F | 0 - 5 |

aufweisen und in einer Körnung von 0.2 - 5 mm, insbesondere 2 - 3 mm und mit einem Feuchtigkeitsanteil von ≥ 5 % eingesetzt werden.

Das Glasgranulat sollte bevorzugt eine Körnung von 2 bis 3 mm haben. Experimentell wurde festgestellt, daß im Falle einer größeren oder kleineren Körnigkeit eine Verschlechterung der mechanischen Eigenschaften der Platte möglich ist. Bei einer zu kleinen Körnung bilden sich innere Hohlräume und Poren. Im Falle der Herstellung von Platten mit einer glatten Rückseite, wozu sehr kleine Temperaturgradienten über die Dicke des Stapels benötigt werden, wird bevorzugt ein Glasgranulat mit minimaler Körnung angewandt, was einen monolithischen Aufbau der Platte garantiert. Im Glasgranulat dürfen keine Glasfasern enthalten sein. Die Feuchtigkeit des Glasgranulats vor dem Mischen mit Sand sollte nicht weniger als 5 % betragen.

Im Falle der Anwendung von trockenem Glasgranulat muß Wasser beiggegeben werden.

In bevorzugter Ausführungsform wird als Zuschlagstoff jede Art von Sand, ohne Anforderung an Reinheit in Körnungen von < 1 mm eingesetzt.

Die Abmischung aus Glas und Sand hat eine Zusammensetzung von 3:1 bis 6:1 Gew.-Teilen. Der Anteil von Sand im Gemisch ist abhängig von den Anforderungen an die Rückseite der Platte, wobei für Platten mit glatter Rückseite ein minimaler Sandanteil benötigt wird, von der Art der dekorativen Oberflächenschicht und den Parametern der thermische Behandlung. Sehr wichtig ist es, daß das Gemisch im Volumen homogen ist.

Nach dem Verfahren nach der vorliegenden Erfindung wird der Zuschlagstoff so gewählt, daß die Viskosität η das eingesetzten Glases immer geringer als die Viskosität der Zuschlagstoffe ist.

Dies ist wichtig im Hinblick auf das natursteinähnliche Aussehen und damit auf die Verteilung der Glasphase in der Bauplatte und damit auch auf die Festigkeitseigenschaften.

Die geschichteten Einzellagen werden dabei in Schichtdicken von
0- 3 mm, insbesondere 1,5 - 2 mm für die Lage Sand (1.1)
2 - 30 mm, insbesondere 12 - 15 mm für die Lage (1.2) der Abmischung
2 - 7 mm, insbesondere 3 - 5 mm für die Lage Glas (1.3)
in die Form eingebracht.

Der Boden der Form wird mit einer ca. 2 mm hohen Sandschicht bedeckt. Auf diese Schicht kommt die Abmischung des Glasgranulats mit Sand. Die Höhe dieser Schicht beträgt z. B. 12 bis 15 mm. Bei der Herstellung von armierten Platten wird ein Drahtgeflecht oder Gitter in die Mitte dieser Schicht eingelegt.

Es wurde auch gefunden, daß es für bestimmte Anwendungsbereiche der Platten technisch vorteilhaft sein kann in diese mittlere Lage 1.2 Glas- und/oder keramische Fasern miteinzubringen, wobei aber darauf zu achten ist, daß die verwendeten Fasern nicht länger als der maximale Durchmesser der eingesetzten Korngröße ist; zu lange Fasern bringen erhebliche Festigkeitsverluste mit sich.

Danach wird die Charge verdichtet und deren Oberfläche geebnet. Günstig ist die Anwendung von Vibrationstischen. Nach der Verdichtung wird die Schicht aus farbigem Glasgranulat aufgeschüttet (3 bis 5 mm) und die Oberfläche abermals geebnet. Die Glasgranulat-Gemische für die dekorative Lage sollten für jeden Farbton standardisiert und auf Lager hergestellt werden. Eine Änderung der Zusammensetzung dieses Gemisches, zum Beispiel bei Anwendung von Glasbruch unbekannter Herkunft und chemischer Zusammensetzung bringt notwendigerweise eine Korrektur der Prozeßparameter mit sich. Das Glasgranulat für die dekorative Schicht kann durch verschiedene Formen oder Siebe aufgeschüttet werden, um z. B. bestimmte Muster zu erstellen.

Nach der vorliegenden Erfindung werden in bevorzugter Ausführungsform in die oberste Lage 1.3 aus gebrochenem Glas auch Glimmer und/oder Farbpigmente und/oder Metalloxide in Anteilen von 0,05 - 3 % eingemischt, um bestimmte dekorative Effekte und Farbtöne zu erzielen. Mit einer Beimischung von Glimmer werden beispielsweise Bauplatten hergestellt, deren Aussehen Platten aus Granit sehr nahekommt.

Nach einer besonders bevorzugten Modifikation des Verfahrens wird nach dem Verfahrensschritt 1.7, bei dem die maximale Prozeßtemperatur erreicht wird, das Glas der obersten Einzellage 1.3 auf Temperaturen abgekühlt, die Viskositätswerten η von 10⁷ bis 10⁸ dPas entsprechen und diese Temperatur 5 - 15 min, insbesondere 10 min. gehalten und dann so schnell es technisch mit vernünftigem Aufwand möglich ist, z. B. mittels kalter Preßluft weiter auf 350 bzw. 300°C abgekühlt.

Optimale Resultate wurden dabei mit Platten einer Dicke von 10 bis 12 mm erreicht. Die Festigkeit der Oberflächenschicht ist 5 - 8 mal größer als die der gewöhnlichen Platten.

Wenn während der Abkühlung der Oberflächenschicht Mikrorisse entstanden, konnten diese durch ein Tempern bei einer Temperatur von 400 - 500°C beseitigt werden. Dieses Glühen kann man im Bedarfsfall als einen zusätzlichen technologischen Schritt in den Herstellungsprozeß integrieren.

Die Baumaterialien, hergestellt nach dem Verfahren nach der vorliegenden Erfindung weisen die folgenden typischen Werte auf:

| | |
|---|---|
| Dichte | 2,5 - 3.0 g/cm³ |
| Biegezugfestigkeit | 10 - 20 MPa |
| Druckfestigkeit | 200 - 250 MPa |
| Stoßfestigkeit | ca. 8 kgcm/cm² |
| Härte nach Mohs | 6 - 7 |
| Feuchtigkeitsaufnahme | 0,2 % - 0.8 % innerhalb 48 Stunden |
| Wärmeausdehnungskoeffizient | 90 - 120 x 10⁻⁷ x K⁻¹ |
| Wärmeabschreckfestigkeit (Temperaturdifferenz) | 60 K - 120 K |
| Frostfestigkeit (Zyklen von + 30°C bis - 30°C) | min. 100 |

Das Verfahren zur Herstellung der dekorativen, natursteinähnlichen Baumaterialien nach der Erfindung wird anhand der nachfolgenden Beispiele weiter erläutert:

### Beispiel 1:

Vor dem Füllen muß die Form, beispielsweise mit den Abmessungen 800 x 600 mm von Materialresten wie Sand, Glas und feuerfesten Beschichtungen gereinigt werden. Nach der Reinigung wird auf Wände und Boden der Form eine dünne Schicht feuerfester Suspension aufgetragen, die Ecken werden mit einer Kaolinpaste abgedeckt, um später ein Verkleben, Verbacken oder Versintern mit der Abmischung zu vermeiden.

Danach wird die Form getrocknet, am besten mit Infrarot-Strahlern.

Die Form besteht aus üblichem feuerbeständigem oder feuerfestem Material. Vorteilhaft ist z. B. Cordierit, wie er auch für Brennhilfsmittel in der keramischen Industrie überall Verwendung findet.

Dabei muß das Formenmaterial so gewählt werden, daß bei den Prozeßtemperaturen ein Sintern ("Verbacken") der Form mit der Abmischung unterbleibt.

Hier soll der Verfahrensablauf am Beispiel von Fensterglas der Zusammensetzung (in Gew.-%):
SiO₂ 71.7; Al₂O₃ 1.85; Fe₂O₃ 0.11; CaO 6.8; MgO 4.04; Na₂O 13.8; K₂O 1.3; SO₃ 0.4
veranschaulicht werden.

Das Glas wird auf übliche Weise in einem Brecher zu einem Glasgranulat mit einer Körnung von ≥ 2 und ≤ 3 mm vorgebrochen und durch Zumischung von 5 % Wasser, der nach der Erfindung notwendige Feuchtigkeitsanteil eingestellt.

Die Zugabe von Wasser hat zusätzlich den Vorteil, daß jegliche Staubbildung unterbleibt.

Die wie oben beschrieben vorbereitete Form, wird nun mit gesiebtem Sand der Körnung ≤ 1 mm und einer Feuchtigkeit von 7 % in einer Schichtdicke von 1.5 mm befüllt und der Sand so verteilt, daß er eine gleichmäßig dicke Lage auf dem Boden der Form bildet; gleichzeitig wird verdichtet.
Anschließend wird eine homogene Abmischung aus 6 Teilen des o. g. Fensterglases mit 1 Teil Sand hergestellt und die untere Sandlage in der Form gleichmäßig 12 mm dick mit dieser Abmischung überschichtet, wobei weitervibriert wird, um eine gute Verdichtung der Lagen zu erreichen.

Diese mittlere Schicht kann außer Sand und Glas auch andere Industrieprodukte wie Schlacken, Aschen, Abfälle aus der Glasfaserproduktion und weitere, besonders auch poröse, anorganische Materialien einschließen.

Anschließend wird eine gleichmäßige 3 mm dicke Lage aus reinem Glas aufgeschüttet.

Jede einzelne Lage für sich und der gesamte Lagenstapel wird verdichtet.
Die so befüllte Form wird anschließend in einen kontinuierlich arbeitenden, elektrisch beheizten Durchlaufofen gebracht und der Lagenstapel auf eine Temperatur aufgeheizt, bei der das Material sintert, wobei die Oberfläche des Lagenstapels soweit aufschmilzt, daß sich eine feuerpolierte, spiegelglatte Oberfläche ausbildet.

Der Durchlaufofen muß dabei so gesteuert werden können, daß sich über die Oberfläche der Form bzw. des zu brennenden Gutes eine sehr gleichmäßige Temperatur ausbildet und dabei gleichzeitig ein Temperaturgradient über die Höhe des Lagenstapels gewährleistet wird.

Besonders bewährt hat sich dabei ein Durchlaufofen mit einer Reihe von aufeinander folgenden, verbundenen rechteckigen Kammern, die als unabhängige und getrennt steuerbare Baugruppen ausgeführt sind und voneinander durch räumliche Abschirmungen getrennt werden können.

Der 16,5 mm dicke Lagenstapel auf Basis des Fensterglases wird nun in der Form von Raumtemperatur mit 18 K/min. auf 750°C in 40 min. hochgeheizt und 13 min. lang ausgeglüht. Wichtig ist, daß in dieser Temperaturzone die Bildung eines Temperaturgradienten in Richtung der Plattendicke gewährleistet sein muß, um ein Verkleben der Unterseite der Platte mit der Form bei Maximaltemperatur zu vermeiden.

Danach wird weiter mit 10°K/min. in 20 min. auf 950°C hochgeheizt und diese Temperatur 16 min. gehalten. Die Viskosität des Fensterglases beträgt bei 950°C 10^{4.5} dPas.

Bei dieser Viskosität kann auch die spätere Oberflächenbeschaffenheit der Platte beeinflußt werden:
- Soll eine Platte mit wellenartiger Oberfläche hergestellt werden, wird, beginnend bei dieser Maximal-Temperatur die Form mit dem Gut in eine solche Schwingung versetzt, daß sich auf der aufgeschmolzenen Oberfläche stehende Wellen bilden.
- Soll die Oberfläche der Platte später dekorative Mikrokrater zeigen, wird das Ausscheiden von Gasen bei dieser Temperatur aus den unterliegenden Bereichen induziert und anschließend durch Abkühlung mit rascher Viskositätserhöhung diese Struktur eingefroren.

Danach beginnt die Abkühlung des nun versinterten und teilweise aufgeschmolzenen Produktes mit 15 K/min. auf 750°C in 13 min., wobei diese Temperatur dann 27 - 30 min. gehalten wird. Die Abkühlung muß dabei so erfolgen, daß eine gleichmäßige Temperaturverteilung über die gesamte Dicke des Stapels erreicht wird.

Anschließend weiteres exakt lineares Abkühlen mit 3 K/min. auf 420°C und bei Erreichen dieser Temperatur dann Abkühlen auf Raumtemperatur ohne Vorgaben.

### Beispiel 2:

Um die Variationsbreite und die Universalität des Verfahrens nach der Erfindung zu veranschaulichen wurde für dieses Beispiel eine relativ ungewöhnliche Glaszusammensetzung gewählt (Gew.-%):
SiO₂ 70; Na₂O 16; Al₂O₃ 7; CaO 2.5 und F 4.5 (!).

Das Glasgranulat wurde gebrochen und durch Sieben eine Korngröße von 2 bis 3 mm selektiert.

Es wurden wiederum 3 Schichten a bis c in die Form eingebracht:
a) 1 mm Sand,
b) 8 mm Abmischung, Glas/Sand mit 4 Teilen Glas auf 1 Teil Sand,
c) 3 mm reines Glasgranulat.

Der Temperaturzyklus bei dieser Glasart ("Marblit"):

| **von [°C]** | | **bis [°C]** | **mit [°K/min.]** | **in [min.]** | **Haltezeit [min.]** |
|---|---|---|---|---|---|
| (1.5) | Raumtemperatur | 650 | 21 | 30 | - |
| (1.6) | 650 | 650-680 | - | - | 10 |
| (1.7) | 680 | 920 | 9 | 27 | 12 |
| (1.8/1.9) | 920 | 690 | 23 | 10 | 20 |
| (1.9) | 690 | 450 | 4 | 60 | - |
| | 450 | Raumtemperatur ohne Einschränkung | | | |

Die Beispiele liefern sehr haltbare, natursteinähnliche Bau- und Dekorationsmaterialien mit langer Lebensdauer. Sie finden Anwendung für Verkleidungen von Außen- und Innenwänden von Objekten des Industrie-, Wohnungs- und Verkehrs-Bauwesens, für Möbel und für dekorative Kunstwerke. Das Material wird aus Glas und Sand hergestellt. Es zeichnet sich durch eine hohe Festigkeit und Härte aus. Es ist hygienisch, leicht zu reinigen, hochtemperaturfest, chemisch beständig und elektrisch nichtleitend.

Das Verkleidungsmaterial nach der Erfindung ist ein dreischichtiges Plattenmaterial. Die untere Schicht besteht hauptsächlich aus gesintertem Sand. Die mittlere Schicht wird durch eine entsprechende thermische Behandlung zum Teil angeschmolzen, so daß ein teilweise kristallines, glasähnliches Material entsteht. Die obere, dekorative Schicht besteht aus Glasbruch mit einem Anteil an verschiedenen Additiven (farbige Metalloxide). Diese Schicht wird im Herstellungsprozeß feuerpoliert. In Bezug auf die physikalischen, chemische und mechanischen Eigenschaften ist das vorgestellte Bau- und Dekorationsmaterial besser als natürliche, teure Materialien, wie z. B. Granit, Marmor oder Travertin.

Die Befestigung der Platten nach der Erfindung erfolgt beispielsweise über eine Halterungsanordnung wie sie in der EP 04 11 442 B1 vorgestellt wird oder über die derzeit üblichen und marktbekannten Anordnungen.

## Patentansprüche

1. Verfahren zur Herstellung von natursteinähnlichen, plattenförmigen Bau- und Dekorationsmaterialien hoher Festigkeit zur Verkleidung von Fassaden, Wänden und Böden im Innen- und Außenbereich aus geschichteten Einzellagen von gebrochenem Glas, Zuschlagsstoffen und deren Abmischungen, mit den Verfahrensschritten :
1.1 Einbringen einer ebenen, gleichmäßig dicken Lage Sandes in eine oder mehrere temperaturbeständige Formen,
1.2 Überschichten mit einer weiteren ebenen, gleichmäßig dicken Lage aus einer Abmischung aus Glas und Sand, und
1.3 Aufschütten einer weiteren ebenen Lage gebrochenen Glases,
1.4 wobei jede einzelne Lage für sich und der gesamte Lagenstapel verdichtet werden,
1.5 anschließend Aufheizen des Lagenstapels in der Form von Raumtemperatur auf eine Temperatur von 600 - 850°C, abhängig von der chemischen Zusammensetzung der Abmischung, in einer Zeit von 20 bis 100 min.,
1.6 Ausglühen des Stapels bei dieser Temperatur für eine Dauer von 6 bis 35 min.,
1.7 anschließend weitere Temperaturerhöhung bis in einen Bereich, in dem die Oberfläche des Glases eine Viskosität η von 10⁴ bis 10^{5.5} dPas aufweist, Halten dieser Temperatur für 6 bis 40 min., wobei
die Temperaturbeaufschlagung bei den bisherigen Verfahrensschritten einseitig von oben durch einen über die gesamte Plattenfläche gleichmäßig verteilten Wärmestrom erfolgt,
1.8 danach Abkühlen auf Temperaturen von 750 - 600°C in einer Zeit, die benötigt wird, um eine gleichmäßige Temperaturverteilung über die gesamte Dicke des Stapels zu erreichen, während 6 bis 35 min.,
1.9 weiteres Halten dieser Temperatur 15 bis 65 min. lang, dann exakt lineares weiteres Abkühlen auf Temperaturen von 400 - 500°C mit 2 bis 5 K/min., und bei Erreichen dieser Temperaturen dann freies Abkühlen oder Zwangskühlung auf Raumtemperatur.

2. Verfahren nach Anspruch 1,
**dadurch gekennzeichnet,**
daß als gebrochenes Glas ein Glasgranulat mit einer Zusammensetzung von (in Gew.-%) 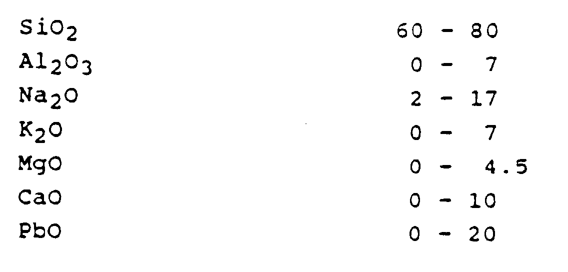 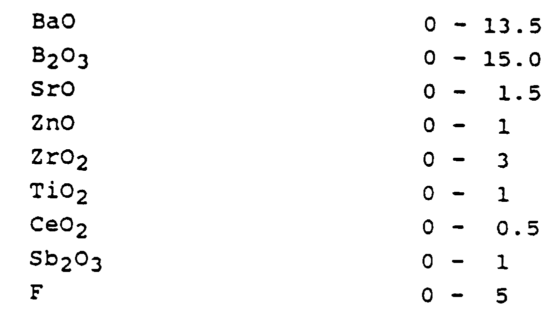 und einer Körnung von 0,2 bis 5 mm, insbesondere 2 bis 3 mm und einem Feuchtigkeitsanteil von ≥ 5 % Wasser eingesetzt wird.

3. Verfahren nach Anspruch 2,
**dadurch gekennzeichnet,**
daß als Glas ein Glasgranulat aus Flachglas und/oder Hohlglas engesetzt wird.

4. Verfahren nach Anspruch 1,
**dadurch gekennzeichnet,**
daß als Zuschlagstoff Sand in Körnungen unter 1 mm und mit einem Feuchtigkeitsanteil von mindestens 7 % Wasser eingesetzt wird.

5. Verfahren nach den Ansprüchen 1 bis 4,
**dadurch gekennzeichnet,**
daß Abmischungen aus Glas und Sand aus 3 bis 6 Gew.-Teilen Glas auf 1 Gew.-Teil Sand, insbesondere aus 4 Gew.-Teilen Glas auf 1 Gew.-Teil Sand hergestellt werden.

6. Verfahren nach den Ansprüchen 1 bis 5,
**dadurch gekennzeichnet,**
daß die geschichteten Einzellagen in Schichtdicken von
0 - 3 mm, insbesondere 1.5 - 2 mm für die Lage Sand (1.1)
2 - 30 mm, insbesondere 12 - 15 mm für die Abmischungen (1.2)
2 - 7 mm, insbesondere 3 - 5 mm für die Lage Glas (1.3)
eingebracht werden.

7. Verfahren nach den Ansprüchen 1 bis 6,
**dadurch gekennzeichnet,**
daß in die aus Glas und Sand abgemischte Lage 1.2 eine Metallarmierung, insbesondere in Form eines Gitters oder Drahtgeflechtes eingebracht wird.

8. Verfahren nach den Ansprüchen 1 bis 7,
**dadurch gekennzeichnet,**
daß in die obere Lage aus gebrochenem Glas, Glimmer und/oder Farbpigmente und/oder Metalloxide in Anteilen von 0,05 - 3 % eingemischt werden.

9. Verfahren nach den Ansprüchen 1 bis 8,
**dadurch gekennzeichnet,**
daß nach dem Verfahrensschritt 1.7 bis auf Viskositätswerte η von 10⁷ bis 10⁸ dPas des Glases der obersten Einzellage 1.3 abgekühlt wird, bei der dieser Viskosität entsprechenden Temperatur 5 - 15 min., insbesondere 10 min. gehalten und dann schnell, insbesondere mittels Preßluft bis auf 350/300 °C abgekühlt wird.

## Claims

1. A method of making slab construction and decorative materials which resemble natural stone and have a high strength, for cladding façades, walls and floors indoors and outdoors, comprising stratified individual layers of broken glass, aggregates and mixtures thereof, having the following process steps:
1.1 introduction of a planar layer of sand of uniform thickness into one or more heat-resistant moulds,
1.2 covering over with a further planar layer of uniform thickness comprising a the mixture of glass and sand, and
1.3 pouring on a further planar layer of broken glass,
1.4 each individual layer being compacted separately and the entire stack of layers being compacted,
1.5 subsequently, heating the stack of layers in the mould from room temperature to a temperature of 600 - 850°C, dependent on the chemical composition of the mixture, during a period from 20 to 100 min.,
1.6 thoroughly heating the stack at this temperature for a period of 6 to 35 min.,
1.7 subsequently, further increasing the temperature to a range in which the surface of the glass has a viscosity η of 10⁴ to 10^{5.5} dPas, and maintaining this temperature for 6 to 40 min.,
the action of heat during the process steps up until this being from one side, from above, by a heat stream which is distributed uniformly over the entire slab surface,
1.8 then cooling to temperatures of 750 - 600°C during a period required to achieve uniform temperature distribution over the entire thickness of the stack, for 6 to 35 min.,
1.9 continuing to maintain this temperature for 15 to 65 min., and then cooling further in a precisely linear manner to temperatures of 400 - 500°C at a rate of 2 to 5 K/min, and on reaching these temperatures then cooling freely or in enforced manner to room temperature.

2. A method according to Claim 1, characterized in that there are used as the broken glass glass granules having a composition in percent by weight of the following:
| | |
|---|---|
| SiO₂ | 60 - 80 |
| Al₂O₃ | 0 - 7 |
| Na₂O | 2 - 17 |
| K₂O | 0 - 7 |
| MgO | 0 - 4.5 |
| CaO | 0 - 10 |
| PbO | 0 - 20 |
| BaO | 0 - 13.5 |
| B₂O₃ | 0 - 15.0 |
| SrO | 0 - 1.5 |
| ZnO | 0 - 1 |
| ZrO₂ | 0 - 3 |
| TiO₂ | 0 - 1 |
| CeO₂ | 0 - 0.5 |
| Sb₂O₃ | 0 - 1 |
| F | 0 - 5 |
and having a grain size of 0.2 to 5 mm, in particular 2 to 3 mm, and a moisture content of ≥ 5% of water.

3. A method according to Claim 2, characterized in that there are used as the glass glass granules of flat glass and/or hollow glass.

4. A method according to Claim 1, characterized in that there is used as the aggregate sand of grain sizes below 1 mm and having a moisture content of at least 7% of water.

5. A method according to Claims 1 to 4, characterized in that mixtures of glass and sand comprising 3 to 6 parts by weight of glass to 1 part by weight of sand, in particular 4 parts by weight of glass to 1 part by weight of sand, are made.

6. A method according to Claims 1 to 5, characterized in that the stratified individual layers are introduced in stratum thicknesses of:
0 - 3 mm, in particular 1.5 - 2 mm for the layer of sand (1.1)
2 - 30 mm, in particular 12 - 15 mm for the mixtures (1.2)
2 - 7 mm, in particular 3 - 5 mm for the layer of glass (1.3).

7. A method according to Claims 1 to 6, characterized in that a metal reinforcement, in particular in the form of a grating or wire mesh, is introduced into the layer mixed from glass and sand 1.2.

8. A method according to Claims 1 to 7, characterized in that mica and/or coloured pigments and/or metal oxides are mixed into the upper layer of broken glass in proportions of 0.05 - 3%.

9. A method according to Claims 1 to 8, characterized in that, after method step 1.7, cooling is carried out to viscosity values η of 10⁷ to 10⁸ dPas of the glass of the uppermost individual layer 1.3, the temperature corresponding to this viscosity is maintained for 5 - 15 min., in particular 10 min., and then cooling is carried out rapidly, in particular by means of compressed air, to 350 / 300°C.

## Revendications

1. Procédé pour la fabrication de matériaux de construction et de décoration sous forme de plaques très solides imitant la pierre naturelle pour le parement de façades, de murs et le revêtement de sols, d'intérieur et d'extérieur, lesquels matériaux sont composés de couches superposées constituées de verre, de granulats et de mélanges de ceux-ci, comportant les étapes de procédé consistant
1.1 à introduire dans un ou plusieurs moules réfractaires une couche de sable régulière et plane,
1.2 à la couvrir avec une autre couche régulière et plane constituée d'un mélange de verre et de sable, et
1.3 à former au-dessus de celle-ci une autre couche plane de verre broyé,
1.4 à tasser chaque couche individuellement et l'ensemble de l'empilement de couches,
1.5 à chauffer ensuite sur une période de 20 à 100 minutes, l'empilement de couches dans le moule de la température ambiante à une température comprise entre 600 et 850 °C, qui dépend de la composition chimique du mélange,
1.6 à porter au rouge l'empilement de couches à cette température pendant une durée de 6 à 35 minutes,
1.7 puis à augmenter la température davantage jusqu'à un domaine de température où le verre en surface a une viscosité η comprise entre 10⁴ et 10^{5,5} dPa.s, à maintenir cette température pendant 6 à 40 minutes, l'application de la température dans ces étapes de procédé précédentes se faisant par le dessus au moyen d'un flux de chaleur réparti uniformément sur toute la surface du verre,
1.8 à refroidir à une température comprise entre 750 et 600 °C sur une période de 6 à 35 minutes, c'est-à-dire un temps nécessaire pour obtenir une répartition uniforme de la température sur toute l'épaisseur de l'empilement,
1,9 à maintenir cette température pendant 15 à 65 minutes supplémentaires, puis à effectuer un refroidissement linéaire jusqu'à une température comprise entre 400 et 500 °C avec une vitesse 2 à 5 K/min, et, lorsqu'on a atteint cette température, à laisser refroidir librement ou à faire refroidir jusqu'à température ambiante.

2. Procédé conforme à la revendication 1, caractérisé en ce que l'on utilise, comme verre broyé, des granulés de verre ayant la composition suivante (en % en poids)
| | |
|---|---|
| SiO₂ | 60 - 80 |
| Al₂O₃ | 0 - 7 |
| Na₂O | 2 - 17 |
| K₂O | 0 - 7 |
| MgO | 0 - 4,5 |
| CaO | 0 - 10 |
| PbO | 0 - 20 |
| BaO | 0 - 13,5 |
| B₂O₃ | 0 - 15 |
| SrO | 0 - 1,5 |
| ZnO | 0 - 1 |
| ZrO₂ | 0 - 3 |
| TiO₂ | 0 - 1 |
| CeO₂ | 0 - 0,5 |
| Sb₂O₃ | 0 - 1 |
| F | 0 - 5 |
et une granulométrie de 0,2 à 5 mm, en particulier 2 à 3 mm et une teneur en eau supérieure ou égale à 5 %.

3. Procédé conforme à la revendication 2, caractérisé en ce que l'on utilise, comme verre, des granulés de verre plat et/ou de verre creux.

4. Procédé conforme à la revendication 1, caractérisé en ce que l'on utilise, comme granulats, du sable ayant une granulométrie inférieure à 1 mm et une teneur en eau d'au moins 7 %.

5. Procédé conforme aux revendications 1 à 4, caractérisé en ce que l'on prépare des mélanges de verre et de sable contenant de 3 à 6 parties en poids de verre pour 1 partie en poids de sable, en particulier 4 parties en poids de verre pour 1 partie en poids de sable.

6. Procédé conforme aux revendications 1 à 5, caractérisé en ce que l'on prépare les couches superposées avec les épaisseurs suivantes :
0 - 3 mm, en particulier 1,5 - 2 mm, pour la couche de sable (1.1)
2 - 30 mm, en particulier 12 - 15 mm, pour le mélange (1.2)
2 - 7 mm, en particulier 3 - 5 mm, pour la couche de verre (1.3)

7. Procédé conforme aux revendications 1 à 6, caractérisé en ce que l'on introduit dans la couche de mélange de verre et de sable (1.2) une armure métallique, en particulier sous forme de grillage ou de treillis de fil métallique.

8. Procédé conforme aux revendications 1 à 7, caractérisé en ce que l'on incorpore dans la couche supérieur de verre broyé du mica et/ou des pigments colorés et/ou des oxydes métalliques à raison de 0,05 à 3 %.

9. Procédé conforme aux revendications 1 à 8, caractérisé en ce que, après l'étape de procédé 1.7, on refroidit jusqu'à une viscosité η du verre de la couche supérieure de 10⁷ à 10⁸ dPa.s, en ce que l'on maintient la température correspondant à cette viscosité pendant 5 à 15 minutes, en particulier 10 minutes et en ce que l'on refroidit ensuite rapidement en particulier avec de l'air comprimé à 350/300 °C.
